(19) Europäisches Patentamt
European Patent Office
Office européen des brevets

(11) EP 1 268 582 B1

(12) **EUROPÄISCHE PATENTSCHRIFT**

(45) Veröffentlichungstag und Bekanntmachung des Hinweises auf die Patenterteilung:
**15.09.2004 Patentblatt 2004/38**

(21) Anmeldenummer: **01925444.0**

(22) Anmeldetag: **14.03.2001**

(51) Int Cl.[7]: **C08F 36/00**, C08F 2/24, C08F 2/22, C08F 36/06

(86) Internationale Anmeldenummer:
**PCT/EP2001/002850**

(87) Internationale Veröffentlichungsnummer:
**WO 2001/070835 (27.09.2001 Gazette 2001/39)**

(54) **VERFAHREN ZUR HERSTELLUNG VON KAUTSCHUKTEILCHEN**

METHOD FOR PRODUCING CAOUTCHOUC PARTICLES

PROCEDE DE FABRICATION DE PARTICULES DE CAOUTCHOUC

(84) Benannte Vertragsstaaten:
**AT BE CH CY DE DK ES FI FR GB GR IE IT LI LU MC NL PT SE TR**

(30) Priorität: **21.03.2000 DE 10013733**

(43) Veröffentlichungstag der Anmeldung:
**02.01.2003 Patentblatt 2003/01**

(73) Patentinhaber: **BASF AKTIENGESELLSCHAFT**
**67056 Ludwigshafen (DE)**

(72) Erfinder:
- **GÜNTHERBERG, Norbert**
  **67346 Speyer (DE)**
- **CZAUDERNA, Bernhard**
  **69493 Hirschberg (DE)**
- **BREULMANN, Michael**
  **68199 Mannheim (DE)**
- **OEPEN, Sabine**
  **67158 Ellerstadt (DE)**
- **DUIJZINGS, Wil**
  **NL-6121 JL Born (NL)**
- **NIESSNER, Norbert**
  **67159 Friedelsheim (DE)**

(56) Entgegenhaltungen:
**EP-A- 0 495 365**
**EP-A- 0 728 774**
**EP-A- 0 792 891**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 268 582 B1

Printed by Jouve, 75001 PARIS (FR)

## Beschreibung

Die Erfindung betrifft ein Verfahren zur Herstellung von Kautschukteilchen K enthaltend in polymerisierter Form

A) 80 bis 100 Gew.-%, bezogen auf K, von einem oder mehreren konjugierten Dienmonomeren A, und

B) 0 bis 20 Gew.-%, bezogen auf K, von einem oder mehreren monoethylenisch ungesättigten Comonomeren B

mittels Emulsionspolymerisation in Gegenwart eines Emulgators und eines Polymerisationsinitiators. Außerdem betrifft die Erfindung die nach dem Verfahren hergestellten Kautschukteilchen K, sowie deren Verwendung als Bestandteil von thermoplastischen Formmassen, Dispersionen, Papierstreichmitteln, Oberflächenbeschichtungen und zur Textilveredlung.

Verfahren zur Emulsionspolymerisation von Kautschuken auf Basis von Butadien oder anderen kautschukbildenden Dienen, bei dem ein Teil oder alle Monomeren während der Polymerisation zudosiert werden (sog. Zulauf-Verfahren), sind bekannt.

So beschreibt die DE-OS 34 47 585 Styrol/Butadien-Latices, deren Pfropfunterlage mindestens 86 Gew.-% Styrol und deren Pfropfauflage mindestens 62 Gew.-% Styrol enthält und die im Zulaufverfahren ggf. mit einem Polystyrol-Saatlatex hergestellt werden. Butadienreiche Latices offenbart diese Schrift nicht.

Die EP-A 387 855 lehrt ein Zulaufverfahren zur Herstellung von Polymerteilchen aus u.a. Styrol und Butadien, bei dem ein Saatlatex einer gewichtsmittleren Molmasse $\overline{M}_w$ von nur 500 bis 10 000 verwendet wird. Die Vergleichsbeispiele enthalten zwar auch höhermolekulare Saatlatices, jedoch beträgt der Butadien-Anteil im Zulauf maximal 40 Gew.-%, d.h. auch diese Polymerteilchen sind arm an Butadien.

Die EP-A 814 103 offenbart ein Zulaufverfahren zur Herstellung von Polymerisatdispersionen aus u.a. Styrol und Butadien, bei dem ein Saat-Latex mit den Monomeren vermischt und emulgiert, und diese Emulsion dann dem aufgeheizten Polymerisationsreaktor zudosoiert. Der Saat-Latex wird demnach nicht vorgelegt, sondern ist im Zulauf enthalten, was zu einer unerwünscht breiten Teilchengrößenverteilung führt.

Die EP-A 276 894 lehrt Klebstoffzusammensetzungen aus Stärke und Styrol/Butadien-Latices. Die Latices werden im Zulaufverfahren mit einem Polystyrol-Saatlatex hergestellt und enthalten mehr als 60 Gew.-% Styrol, sind also butadienarm.

Die EP-A 792 891 offenbart ein Verfahren zur Herstellung von Latices auf Basis von konjugierten Dienen wie Butadien, bei dem ein Saatlatex, insbesondere aus Polystyrolteilchen von 10 bis 80 nm Durchmesser, vorgelegt wird. Man dosiert in Gegenwart eines Aktivators (= Initiators) und eines Emulgators die Gesamtmenge der Monomeren derart hinzu, daß sich ein bestimmtes Verhältnis Polymerisationsgeschwindigkeit/Monomer-Zugabegeschwindigkeit einstellt. Die Polymerisation wird erst beendet, wenn der Umsatz mindestens 95 % beträgt. Es wird demnach nur der Saatlatex vorgelegt, nicht jedoch ein Teil der Monomeren. In Vergleichsversuchen werden alle Monomeren zusammen mit dem Saatlatex vorgelegt (Batch = kein Zulauf).

Die EP-A 761 693 lehrt ein Verfahren zur Herstellung von Dienlatices, bei dem ein gewisser Anteil der Reaktionsmischung vorgelegt wird, so daß ein bestimmter Füllgrad des Kessels erzielt wird, und der Rest der Reaktionsmischung unter kontrollierten Bedingungen zulaufen gelassen wird. Mit diesem Verfahren können nur kleine Teilchen von 60 bis 120 nm Durchmesser erzeugt werden. Die dem Verfahren eigene verstärkte Ausnutzung des Gasraumes im Kessel zu Kühlzwecken führt zu verstärkter Koagulatbildung. Außerdem ist die Polymerisationsdauer unökonomisch lang.

Die Latices bzw. Polymerpartikel des Standes der Technik haben folgende Nachteile: Sie sind arm an Butadien, oder es werden lange Polymerisationszeiten benötigt, um größere Teilchen herzustellen. Außerdem weisen die Verfahren des Standes der Technik während der Polymerisationsreaktion große Mengen an nicht umgesetzten Monomeren auf (der sogenannte "Hold-up"), was ein Sicherheitsrisiko bei Störungen sein kann (mangelnde Fahrsicherheit).

Der Erfindung lag die Aufgabe zugrunde, ein verfahren bereitzustellen, das die geschilderten Nachteile nicht aufweist. Insbesondere sollte ein verfahren geschaffen werden, daß es ermögicht, dienreiche Kautschukteilchen mit Diengehalten ≥ 80 Gew.-% und Teilchengrößen über 100 nm in kurzer Zeit herzustellen. Außerdem soll das Verfahren fahrsicher sein, indem der Anteil nicht umgesetzter Monomere (Hold-up) im Reaktor gering gehalten wird.

Demgemäß wurde das eingangs definierte Verfahren gefunden. Es ist dadurch gekennzeichnet, daß man

1) eine Mischung M1 vorlegt, enthaltend, bezogen auf M1,

M1a)20 bis 100 Gew.-% des Wassers, welches zur Herstellung der Emulsion erforderlich ist (Emulsions-Wasser), und

M1b) 0,1 bis 100 Gew.-% des Emulgators,

2) danach eine Mischung M2 zufügt, enthaltend, bezogen auf M2,

M2a) 90 bis 100 Gew.-% von einem oder mehreren Monomeren ausgewählt aus Styrol, $\alpha$-Methylstyrol, Butadien, n-Butylacrylat, Methylmethacrylat und Acrylnitril, und

M2b)0 bis 10 Gew.-% von einem oder mehreren copolymerisierbaren Monomeren,

wobei die Monomeren M2a) und M2b) entweder in monomerer Form unter nachfolgender in-situ-Polymerisation zu einem Saatlatex, oder als Mischung aus polymerisierter und monomerer Form, zugefügt werden, und wobei das Saatlatex-Polymer eine gewichtsmittlere Molmasse über 20 000 aufweist,

3) danach die Polymerisation der erhaltenen Mischung in Gegenwart des Polymerisationsinitiators bei Temperaturen von 5 bis 95°C startet,

4) zeitgleich oder danach eine Mischung M3 zufügt, enthaltend

M3a) 0 bis 100 Gew.-%, bezogen auf B, der Comonomeren B, und

M3b) 0 bis 25 Gew.-%, bezogen auf A, der Dienmonomeren A,

5) zeitgleich oder danach eine Mischung M4 zudosiert, enthaltend

M4a) die restlichen 75 bis 100 Gew.-%, bezogen auf A, der Dienmonomeren A, und

M4b)die restlichen 0 bis 100 Gew.-%, bezogen auf B, der Comonomeren B,

und polymerisiert, und

6) danach die Polymerisation bei einem Umsatz über 90 und unter 95 %, bezogen auf die Summe der Monomeren, beendet,

wobei man die restlichen 0 bis 80 Gew.-% des Emulsions-Wassers und die restlichen 0 bis 99,9 Gew.-% des Emulgators einzeln oder getrennt voneinander bei einem oder mehreren der Schritte 2) bis 5) zufügt.

Außerdem wurden die nach dem Verfahren hergestellten Kautschukteilchen K, sowie deren eingangs genannten Verwendungen gefunden.

Die nach dem erfindungsgemäßen Verfahren hergestellten Kautschukteilchen K enthalten in polymerisierter Form

A) 80 bis 100, bevorzugt 85 bis 100 Gew.-%, bezogen auf K, von einem oder mehreren konjugierten Dienmonomeren A, und

B) 0 bis 20, bevorzugt 0 bis 15 Gew.-%, bezogen auf K, von einem oder mehreren monoethylenisch ungesättigten Comonomeren B, die mit den Dienmonomeren A zu Copolymeren copolymerisierbar sind.

Als Dienmonomere A verwendet man Butadien oder Isopren oder deren Mischungen. Ganz besonders bevorzugt verwendet man Butadien.

Als Comonomere B kommen alle monoethylenisch ungesättigten Monomere in Betracht, insbesondere vinylaromatische Monomere wie Styrol, Styrolderivate der allgemeinen Formel I

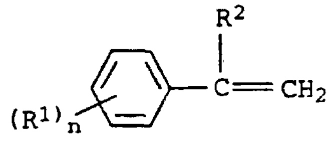

(I);

in der $R^1$ und $R^2$ für Wasserstoff oder $C_1$-$C_8$-Alkyl stehen und n gleich 0, 1, 2 oder 3 ist;
Methacrylnitril, Acrylnitril;
Acrylsäure, Methacrylsäure, weiterhin Dicarbonsäuren wie Maleinsäure und Fumarsäure sowie deren Anhydride wie Maleinsäureanhydrid;
Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid;
$C_1$-$C_{10}$-Alkylester der Acrylsäure wie Methylacrylat, Ethylacrylat, n-Propylacrylat, i-Propylacrylat, n-Butylacrylat, Isobutyl-acrylat, sek.-Butylacrylat, tert.-Butylacrylat, Ethylhexylacrylat, und die entsprechenden $C_1$-$C_{10}$-Alkylester der Methacrylsäure, sowie Hydroxyethylacrylat;
aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;
N-substituierte Maleinimide wie N-Methyl-, N-Phenyl- und N-Cyclohexylmaleinimid;
ungesättigte Ether wie Vinylmethylether;
vernetzende Monomere, wie sie weiter unten bei den Comonomeren M2b) beschrieben werden;
sowie Mischungen dieser Monomeren.

Bevorzugt werden Styrol, $\alpha$-Methylstyrol, p-Methylstyrol, t.-Butylstyrol, n-Butylacrylat, Methylmethacrylat (MMA), Acrylnitril oder deren Mischungen als Comonomere B verwendet. Besonders bevorzugt sind Styrol, n-Butylacrylat, Methylmethacrylat, Acrylnitril oder deren Mischungen. Insbesondere verwendet man Styrol.

In einer besonderen Ausführungsform verwendet man zur Herstellung der Kautschukteilchen K, bezogen auf K,

A) 70 bis 99,9, bevorzugt 90 bis 99 Gew.-% Butadien, und

B) 0,1 bis 30, bevorzugt 1 bis 10 Gew.-% Styrol, Acrylnitril, MMA, n-Butylacrylat oder deren Mischungen.

Die Kautschukteilchen K werden nach dem verfahren der Emulsionspolymerisation hergestellt. Dabei werden Emulgatoren mitverwendet: Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. vorzugsweise nimmt man die Alkalimetallsalze, insbesondere die Na- und K-Salze, von Alkylsulfonaten oder Fettsäuren mit 10 bis 18 Kohlenstoffatomen. Bevorzugt werden als Emulgatoren die genannten Salze höherer Fettsäuren verwendet. Kalium- und Natriumstearat sind besonders bevorzugt. Ebenso kann man Mischungen verschiedener Emulgatoren verwenden.

In der Regel werden die Emulgatoren in Mengen von 0,1 bis 5 Gew.-%, insbesondere von 0,2 bis 3 Gew.-%, bezogen auf die eingesetzten Monomeren A und B, eingesetzt. Besonders bevorzugt sind Mengen von 0,2 bis 1 Gew.-%.

Zu den Polymerisationsinitiatoren ist folgendes zu sagen: zum Starten der Polymerisationsreaktion sind alle Radikalbildner geeignet, die bei der gewählten Reaktionstemperatur zerfallen, also sowohl solche, die allein thermisch zerfallen, als auch solche, die dies in Gegenwart eines Redox-Systems tun. Als Polymerisationsinitiatoren kommen vorzugsweise Radikalbildner, beispielsweise Peroxide wie bevorzugt Peroxosulfate (etwa Natrium- oder besonders bevorzugt Kaliumpersulfat) und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden. Ebenso kann man Mischungen verschiedener Initiatoren verwenden.

In der Regel werden die Polymerisationsinitiatoren in einer Menge von 0,1 bis 1 Gew.-%, bezogen auf die Monomeren A und B, eingesetzt.

Vorzugsweise verwendet man zur Herstellung der Dispersion soviel Wasser, daß die fertige Dispersion einen Feststoffgehalt von 30 bis 60, bevorzugt 40 bis 55 Gew.-% hat. Üblicherweise wird bei einem Wasser/Monomeren-Verhältnis von 2:1 bis 0,7:1 gearbeitet.

Das erfindungsgemäße Verfahren enthält sechs Verfahrensschritte.

Im Schritt 1) legt man eine Mischung M1 vor. Sie enthält, bezogen auf M1

M1a) 20 bis 100, bevorzugt 50 bis 100 Gew.-% des Wassers, welches zur Herstellung der Emulsion erforderlich ist (Emulsions-Wasser), und

M1b) 0,1 bis 100, bevorzugt 15 bis 100 Gew.-% des Emulgators.

Die Mischung M1 kann demnach die Gesamtmenge oder nur einen Teil des Wassers enthalten, welches zur Herstellung der Emulsion erforderlich ist (nachfolgend als Emulsions-Wasser bezeichnet). Gleiches gilt sinngemäß für

den Emulgator.

In Schritt 2) fügt man nach Schritt 1) eine Mischung M2 hinzu. Sie enthält, bezogen auf M2,

M2a) 90 bis 100, bevorzugt 95 bis 100 Gew.-% von einem oder mehreren Monomeren ausgewählt aus Styrol, $\alpha$-Methylstyrol, Butadien, n-Butylacrylat, MMA und Acrylnitril, und

M2b) 0 bis 10, bevorzugt 0 bis 5 Gew.-% von einem oder mehreren copolymerisierbaren Monomeren.

Als Comonomere M2b) sind alle Monomere geeignet, die bereits für die Comonomeren B genant wurden, und außerdem vernetzende Monomere.

Vernetzende Monomere sind bi-oder polyfunktionelle Comonomere mit mindestens zwei olefinischen, nichtkonjugierten Doppelbindungen, beispielsweise Divinylester von Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols, der unter dem Namen Dihydrodicyclopentadienylacrylat bekannt ist, sowie die Allylester der Acrylsäure und der Methacrylsäure.

Falls vernetzende Monomere als Comonomere M2b) verwendet werden, beträgt ihr Anteil bevorzugt 0,01 bis 5, insbesondere 0,05 bis 3 Gew.-%, bezogen auf M2.

Die Monomeren M2a) und M2b) können in monomerer Form zugefügt werden. Falls sie in monomerer Form zugefügt werden, werden sie in Schritt 3) (Starten der Polymerisation) in situ zu einem Saatlatex polymerisiert, d.h. der Saatlatex wird in diesem Fall in situ vor oder während der Polymerisationsreaktion der Dienmonomeren A und der Comonomeren B gebildet oder es werden vor oder während der Polymerisationsreaktion der Stufe 3) Teilchen gebildet, die als Wachstumskeime für die Emulsionspolymerisation dienen.

Die Monomeren M2a) und M2b) können auch als Mischung aus polymerisierter und monomerer Form zugefügt werden, d.h. ein Teil von M2a) und M2b) ist bereits im polymerisierten Saatlatex eingebaut und der verbleibende Teil wird wie beschrieben in situ polymerisiert.

Bevorzugt sind die Polymere der Stufe 2) aufgebaut aus 95 bis 100 Gew.-% Styrol oder n-Butylacrylat und 0 bis 5 Gew.-% der genannten vernetzenden Monomere (also ein Saatlatex aus vernetztem oder unvernetztem Polystyrol oder vernetztem oder unvernetztem Poly-n-butylacrylat). Polystyrol-Polymerpartikel sind besonders bevorzugt.

Erfindungsgemäß haben die Saatlatexpartikel eine gewichtsmittlere Molmasse $\overline{M}_w$ über 20000, bestimmt durch GPC-Messung. Der Saatlatex enthält demnach keine niedermolekularen Polymere (Gewichtsmittel), sondern nur Polymerpartikel üblichen Molekulargewichts.

Bevorzugt haben die Saatlatexpartikel eine gewichtsmittlere Teilchengröße $d_{50}$ von 10 bis 100, besonders bevorzugt 10 bis 80, insbesondere 20 bis 70 nm.

Danach startet man in Schritt 3) des erfindungsgemäßen Verfahrens die Polymerisation der in Schritt 1) bis 2) erhaltenen Mischung in Gegenwart des Polymerisationsinitiators bei Temperaturen von 5 bis 95°C, bevorzugt 40 bis 95°C.

Die restlichen 0 bis 80 Gew.-% des Emulsions-Wassers und die restlichen 0 bis 99,9 Gew.-% des Emulgators werden einzeln oder getrennt voneinander bei einem oder mehreren der Schritte 2) bis 5) zugefügt.

Die - zuvor bereits beschriebenen - Polymerisationsinititatoren werden dem Reaktionsansatz beispielsweise diskontinuierlich als Gesamtmenge zu Beginn der Reaktion, oder aufgeteilt in mehrere Portionen absatzweise zu Beginn und zu einem oder mehreren späteren Zeitpunkten zugefügt, oder kontinuierlich während eines bestimmten Zeitintervalls zugefügt. Die kontinuierliche Zugabe kann auch entlang eines Gradienten erfolgen, der z.B. auf- oder absteigend, linear oder exponentiell, oder auch stufenweise (Treppenfunktion) sein kann.

Insbesondere kann man die Initiatoren schon bei Schritt 1) des Verfahrens zugeben oder erst bei Schritt 2) oder 3) oder 4) oder 5) zufügen. Ebenso kann man einen Teil der Initiatoren bei Schritt 1) und einem weiteren Teil bei Schritt 2) und/oder Schritt 3) und/oder 4) und/oder 5) zufügen. Bevorzugt wird ein Teil des Initiators in Schritt 2) zugefügt und der restliche Teil in Schritt 3) des verfahrens zudosiert.

In einer bevorzugten Ausführungsform wird der Initiator in Schritt 1) und/oder 3) zugefügt und weiterer Initiator in Schritt 4) und/oder 5) in Form eines Dosierprogramms (definierte Dosierung) zugegeben.

In einer weiteren bevorzugten Ausführungsform wird in Schritt 3) Initiator zugefügt, und während der Schritte 4) und 5) weiterer Initiator in Stufen oder kontinuierlich oder in Intervallen nachdosiert.

Gleiches gilt sinngemäß für die Zugabeweise der Emulgatoren. Bevorzugt wird ein Teil der Emulgatoren vorgelegt, und ein Teil mit dem restlichen Emulsions-Wasser zulaufen gelassen.

Ferner kann man Molekulargewichtsregler wie z.B. Ethylhexylthioglycolat, n- oder t-Dodecylmercaptan oder andere Mercaptane, Terpinole und dimeres $\alpha$-Methylstyrol oder andere, zur Regelung des Molekulargewichts geeigneten Verbindungen, mitverwenden. Die Molekulargewichtsregler werden dem Reaktionsansatz diskontinuierlich oder kontinuierlich zugefügt, wie dies für die Initiatoren und Emulgatoren zuvor beschrieben wurde.

Zur Einhaltung eines konstant bleibenden pH-Wertes, der vorzugsweise bei 7 bis 11, bevorzugt 8 bis 10 liegt, kann man Puffersubstanzen wie $Na_2HPO_4/NaH_2PO_4$, Natriumhydrogencarbonat/Natriumcarbonat oder Puffer auf Basis Citronensäure/Citrat, mitverwenden. Auch andere Puffersysteme sind geeignet, sofern sie den pH-Wert im genannten Bereich halten. Regler und Puffersubstanzen werden in den üblichen Mengen eingesetzt, so daß sich nähere Angaben hierzu erübrigen.

In Schritt 4) fügt man zeitgleich mit Schritt 3) oder danach eine Mischung M3 hinzu. Sie enthält,

M3a) 0 bis 100, bevorzugt 50 bis 100 und besonders bevorzugt 95 bis 100 Gew.-%, bezogen auf B, der Comonomeren B, und

M3b) 0 bis 25, bevorzugt 0 bis 20 Gew.-%, bezogen auf A, der Dienmonomeren A.

Bevorzugt wird die Gesamtmenge der Comonomeren B in Schritt 4) zudosiert.

In Schritt 5) dosiert man zeitgleich mit Schritt 4) oder danach eine Mischung M4 hinzu, enthaltend

M4a) die restlichen 75 bis 100, bevorzugt 80 bis 100 Gew.-%, bezogen auf A, der Dienmonomeren A, und

M4b) die restlichen 0 bis 100, bevorzugt 0 bis 50 und besonders bevorzugt 0 bis 5 Gew.-%, bezogen auf B, der Comonomeren B,

und polymerisiert die Monomeren.

Wie bereits erwähnt, können Initiatoren und Emulgatoren auch in Schritt 5) zudosiert werden. Dies ist bevorzugt. Man kann die Monomeren A und ggf. B, die Initiatoren und Emulgatoren gemeinsam als Mischung (ein Zulauf) zudosieren, oder - dies ist bevorzugt - getrennt voneinander als mehrere Zuläufe. Auch die Molekulargewichtsregler werden bevorzugt als Zulauf zudosiert, entweder alleine oder in Mischung mit den zudosierten Monomeren und/oder Emulgatoren. In einer bevorzugten Ausführungsform enthält ein Zulauf die Monomeren, ein weiterer Zulauf die Initiatoren und ein weiterer Zulauf die Emulgatoren.

In einer anderen bevorzugten Ausführungsform werden die Monomeren A und ggf. B, die Emulgatoren und ggf. die Regler gemeinsam mit einer Teilmenge des Emulsions-Wassers emulgiert und als Emulsion zudosiert. Die Herstellung dieser Emulsion kann beispielsweise in einem separaten Behälter erfolgen, oder auch kontinuierlich durch aktive oder passive Emulgiersysteme, z.B. Inline-Mischer, Sulzer-Mischer, Dispergiergeräte mit Rotor-Stator-Prinzip (z.B. Dispax® , Fa. IKA).

In einer anderen, besonders bevorzugten Ausführungsform enthält ein Zulauf eine Mischung aus Monomeren, Wasser, Molekulargewichtsregler und Emulgatoren und ein weiterer Zulauf die Initiatoren. In einer besonders bevorzugten Ausführungsform werden jeweils mehr als 50 Gew.-%,
der Gesamtmenge der Initiatoren,
der Gesamtmenge der Emulgatoren, und
der Gesamtmenge der Molekulargewichtsregler
nicht in Schritt 1) vorgelegt, sondern in Schritt 5) zudosiert.

Die Zudosierung kann mit konstanter Zugabenmenge, oder entlang eines Gradienten erfolgen, der z.B. auf- oder absteigend, linear, exponentiell oder stufenweise (Treppenfunktion) sein kann. Dies gilt z.B. für Monomere, Emulgatoren, Initiatoren und/oder Regler.

Insbesondere können bei mehr als einem Zulauf die jeweiligen Zudosierungen unterschiedlich lang andauern. Beispielsweise kann man den Zulauf von Monomeren und/oder Emulgatoren in kürzerer Zeit zudosieren als den Zulauf der Initiatoren. Dies ist bevorzugt.

Bevorzugt dauert die Zudosierung der Monomeren A und ggf. B in Schritt 5) 1 bis 18, besonders bevorzugt 2 bis 16 und insbesondere 4 bis 14 Stunden.

In einer bevorzugten Ausführungsform wird die Zudosierungsgeschwindigkeit der Monomeren A und B in Schritt 5) so gewählt, daß zu keinem Zeitpunkt der Polymerisatiosreaktion von A und B sich mehr als 50 Gew.-% der Gesamtmenge von monomerem A + B im Polymerisationsreaktor befinden.

In einer besonders bevorzugten Ausführungsform wird die Zudosierungsgeschwindigkeit der Monomere A und B in Schritt 5) so gewählt, daß sich bis zu einem Umsatz von 50 %, bezogen auf die Summe von A + B, weniger als 30 %, bezogen auf die Summe an nicht polymerisierten und polymerisierten Monomeren A + B, nicht polymerisierte Monomere im Polymerisationsreaktor befinden.

In einer bevorzugten Ausführungsform des Verfahrens wählt man in an sich bekannter Weise die Polymerisationsbedingungen, insbesondere die Art, die Menge und die Dosierung (Zugabeweise) des Emulgators derart, daß die gewichtsmittlere Teilchengröße $d_{50}$ der Kautschukteilchen K 80 bis 800, bevorzugt 100 bis 400, besonders bevorzugt 110 bis 350 und insbesondere 120 bis 300 nm beträgt.

Im nachfolgenden Schritt 6) des Verfahrens beendet man die Polymerisation bei einem Umsatz von über 90 und unter 95 %, bezogen auf die Summe der Monomeren. Die Polymerisation wird also beendet, wenn für den Umsatz U gilt: 90 % < U < 95 %.

Das Beenden geschieht in üblicher Weise, z.B. durch Absenken der Reaktortemperatur oder Zugabe von inhibierenden Substanzen, wie z.B. Diethylhydroxylamin, oder durch Entfernen der nicht umgesetzten Monomeren etwa durch Entspannen des Reaktors oder durch eine Kombination dieser Abbruch-Methoden.

Bevorzugt wird während der einzelnen Verfahrensschritte ein Temperaturgradient eingestellt, z.B.

Schritt 4): Starten bei 60 bis 80°C,

Schritt 5): während der Polymerisation Gradient bis auf 75 bis 95°C Maximaltemperatur,

Schritt 6): Beenden durch Abkühlen auf 50°C und/oder Entfernen der Monomeren.

Das Aufheizen und Abkühlen kann z.B. linear oder stufenweise, oder gemäß einer anderen Funktion erfolgen. Insbesondere kann das Aufheizen unter Ausnutzung der Reaktionswärme dem adiabatischen Reaktionsverlauf folgen.

Üblicherweise wird die Polymerisation der Kautschukteilchen K durch Wahl der Reaktionsbedingungen so geführt, daß Kautschukteilchen mit einem bestimmten Vernetzungszustand resultieren. Als hierfür wesentliche Parameter sind beispielhaft anzuführen die Reaktionstemperatur und -dauer, das Verhältnis von Monomeren, Regler, Initiator und die Zulaufgeschwindigkeit und die Menge und der Zugabezeitpunkt von Regler und Initiator, sowie Art und Menge gegebenenfalls verwendeter vernetzender Monomeren.

Eine Methode zur Charakterisierung des Vernetzungszustandes von vernetzten Polymerteilchen ist die Messung des Quellungsindex QI, der ein Maß für die Quellbarkeit eines mehr oder weniger stark vernetzten Polymeren durch ein Lösemittel ist. Übliche Quellungsmittel sind beispielsweise Methyletylketon oder Toluol. Üblicherweise liegt der QI der erfindungsgemäßen Kautschukteilchen im Bereich QI = 10 bis 60, bevorzugt bei 15 bis 55 und besonders bevorzugt bei 18 bis 50.

Eine andere Methode zur Charakterisierung des Vernetzungszustandes ist die Messung von NMR-Relaxationszeiten der beweglichen Protonen, die sog. $T_2$.Zeiten. Je stärker vernetzt ein bestimmtes Netzwerk ist, desto niedriger liegen seine $T_2$-Zeiten. Übliche $T_2$-Zeiten für die erfindungsgemäßen Kautschukteilchen sind $T_2$-Zeiten im Bereich 2,0 bis 4,5 ms, bevorzugt 2,5 bis 4,0 ms und besonders bevorzugt 2,5 bis 3,8 ms, gemessen an verfilmten Proben bei 80°C.

Ein weiteres Maß für die Charakterisierung der Kautschukteilchen und deren Vernetzungszustand ist der Gelgehalt, d.h. derjenige Produktanteil, der vernetzt und damit in einem bestimmten Lösemittel nicht löslich ist. Sinnvollerweise wird der Gelgehalt im gleichen Lösemittel wie der Quellungsindex bestimmt. Übliche Gelgehalte der erfindungsgemäßen Kautschukteilchen liegen im Bereich 45 bis 90 %, bevorzugt 50 bis 85 % und besonders bevorzugt 55 bis 80 %.

Die Bestimmung des Quellungsindex geschieht beispielsweise nach folgendem Verfahren: ca. 0,2 g des Feststoffes einer durch Verdampfen des Wassers verfilmten Kautschukteilchendispersion werden in einer genügend großen Menge (z.B. 50 g) Toluol angequollen. Nach z.B. 24 h wird das Toluol abgesaugt und die Probe ausgewogen. Nach Trocknen der Probe im Vakuum wird erneut ausgewogen. Der Quellungsindex ist das Verhältnis der Auswaage nach dem Quellungsvorgang zu der Auswaage trocken nach der erneuten Trocknung. Dementsprechend errechnet sich der Gelanteil aus dem Verhältnis der Trockenauswaage nach dem Quellschritt zur Einwaage vor dem Quellschritt (x 100 %)

Die Bestimmung der $T_2$-Zeit geschiegt durch Messen der NMR-Relaxation einer entwässerten und verfilmten Probe der Kautschukteilchendispersion. Hierzu wird beispielsweise die Probe nach Ablüften über Nacht bei z,B. 60°C 3 h im Vakuum getrocknet und dann mit einem geeigneten Meßgerät, z.B. minispec-Gerät der Fa. Bruker, bei 80°C vermessen. Vergleichbar sind nur Proben, die nach der gleichen Methode vermessen wurden, da die Relaxation deutlich temperaturabhängig ist.

Man kann die Kautschukteilen K als solche verwenden, oder weitere Monomere aufpolymerisieren, insbesondere pfropfpolymerisieren.

Diese aufpolymerisierten Monomere bilden in der Regel eine Schale, welche die Kautschukteilchen K umschließt. Im Falle einer Pfropfpolymerisation wird sie als Pfropfschale oder -auflage bezeichnet, wobei Pfropf Polymerisate entstehen.

Die Schale kann aus allen Monomeren aufgebaut sein, die sich radikalisch in Emulsion polymerisieren lassen.

Die Herstellung der Schale kann unter den gleichen Bedingungen wie die Herstellung der Kautschukteilchen K erfolgen, wobei man die Schale in einem oder mehreren Verfahrensschritten herstellen kann (ein- oder mehrstufige Pfropfung). Man kann auch mehr als zwei Schalen aufpolymerisieren, indem man die Monomeren entsprechend wechselt. Die Übergänge zwischen den Schalen (Stufen) können scharf oder verschmiert sein. Weitere Einzelheiten zur Herstellung der Pfropfpolymerisate sind in den DE-OS 12 60 135 und 31 49 358 beschrieben.

Nach Beendigung der Polymerisation - gleich ob mit oder ohne aufpolymerisierte Schale - liegen die Kautschukteilchen K in Wasser dispergiert vor. Diese Dispersion kann entweder als solche weiterverarbeitet werden, oder man kann die Kautschukteilchen K von der wäßrigen Phase abtrennen. Diese Aufarbeitung erfolgt in an sich bekannter Weise, beispielsweise durch Sieben, Filtrieren, Dekantieren oder Zentrifugieren, wobei die Kautschukteilchen erforderlichenfalls in üblicher Weise weiter getrocknet werden können, etwa durch Warmluft, Sprühtrocknung oder mittels eines Stromtrockners.

Die mit dem erfindungsgemäßen Verfahren hergestellten partikelförmigen Kautschukteilchen K können vielfältig verwendet werden. Nur beispielhaft sei ihre Verwendung in nicht aufgearbeiteter Form als Dispersion für Anstrichstoffe (Dispersionsfarben) oder bei der Papierherstellung (Papierstreichmittel) sowie als Oberflächenbeschichtung und zur Textilveredlung genannt. Ebenso können sie als Propfgrundlage zur Schlagzähmodifizierung von thermoplastischen Formmassen verwendet werden.

Die Herstellung von thermoplastischen Formmassen, welche die Kautschukteilchen K enthalten, kann nach an sich bekannten Verfahren erfolgen, z.B. durch Einarbeiten der noch feuchten oder getrockneten Kautschukteilchen K in die Thermoplast-Matrix oberhalb des Schmelzpunktes der Matrix, insbesondere bei Temperaturen von 150 bis 350°C, in üblichen Mischvorrichtungen, wie Extrudern oder Knetern. Es ist auch möglich, die Dispersion der Kautschukteilchen K als solche direkt in den Thermoplasten einzuarbeiten, wobei das Dispersionswasser in üblicher Weise, etwa über Entgasungseinrichtungen als Dampf, während der Einarbeitung entfernt wird.

Bei der Angabe der mittleren Teilchengröße d handelt es sich um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben.

Der $d_{10}$-Wert gibt denjenigen Teilchendurchmesser an, bei dem 10 Gew.-% aller Teilchen einen kleineren und 90 Gew.-% einen größeren Durchmesser haben. Umgekehrt gilt für den $d_{90}$-Wert, daß 90 Gew.-% aller Teilchen einen kleineren und 10 Gew.-% einen größeren Durchmesser haben als derjenige Durchmesser, der dem $d_{90}$-Wert entspricht. Der gewichtsmittlere Teilchendurchmesser $d_{50}$ gibt denjenigen Teilchendurchmesser an, bei dem 50 Gew.-% aller Teilchen einen größeren und 50 Gew.-% einen kleineren Teilchendurchmesser aufweisen. $d_{10}$-, $d_{50}$- und $d_{90}$-Wert charakterisieren die Breite Q der Teilchengrößenverteilung, wobei $Q = (d_{90}-d_{10})/d_{50}$. Je kleiner Q ist, desto enger ist die Verteilung.

Beispiele:

Der Anteil der im Reaktor befindlichen Monomeren, der bei einem bestimmten Umsatz noch nicht umgesetzt wurde, wird nachfolgend als Hold-up bezeichnet. Er ist bezogen auf die gesamte Monomermenge, die bis zu dem betrachteten Zeitpunkt in den Reaktor gegeben wurde.

Es wurde entiomisiertes Wasser verwendet.

Der verwendete Polystyrol-Saatlatex hatte eine mittlere Molmasse der Polystyrol-Partikel von über 100 000 gemessen mit GPC.

Beispiel 1

In einem Stahlautoklaven (120 1) wurden 50 kg Wasser, 0,189 kg Kaliumstearat, 150 g Natriumhydrogencarbonat ($NaHCO_3$) und 83 g Kaliumpersulafat (KPS) bei 63°C gelöst. Dann wurde die Temperatur auf 67°C erhöht. Innerhalb 35 min. wurde eine Mischung aus 8,658 kg Butadien und 3,367 kg Styrol in die Vorlage dosiert. 10 min nach Beginn der Dosierung wurden 160 g tert.-Dodecylmercaptan (TDM) in den Kessel dosiert.

Während der nachfolgenden Phasen der Polymerisation wurde die Temperatur schrittweise auf die Endtemperatur erhöht. 2 Stunden nach Beginn der Dosierung begann man, 36,8 kg Butadien innerhalb 10 h in den Reaktor zu dosieren (Zulauf 2). 6 h nach Zulauf 2-Beginn wurden weitere 160g TDM in den Reaktor gegeben. Eine Stunde nach Zulauf 2-Ende wurden erneut 160 g TDM hinzugefügt. Nach weiteren 2 h wurde auf die Endtemperatur von 75°C erwärmt. Nach weiteren 4 h wurde die Reaktion durch Abkühlen auf 50°C und Entspannen abgebrochen.

Der Umsatz betrug 93,8 % bei einem Feststoffgehalt von 46,9 % nach einer Gesamtzeit von 20 h; die Teilchengröße $d_{50}$ = 143 nm und der QI lag bei 33. Der Hold-up bei 50 % Umsatz betrug ca. 25 %.

Beispiel 2

In einem Stahlautoklaven (120 1) wurden 48,5 kg Wasser, 0,189 kg Kaliumstearat, 150 g $NaHCO_3$ und 14 g KPS bei 63°C gelöst. Dann wurde die Temperatur auf 70°C erhöht. Innerhalb 35 min. wurde eine Mischung aus 8,658 kg Butadien und 3,367 kg Styrol in die Vorlage dosiert. 10 min nach Beginn der Dosierung wurden 160 g TDM in den Kessel dosiert.

2 Stunden nach Beginn der Dosierung wurde die Temperatur auf 75°C erhöht und nach einer weiteren Stunde begann man, 36,03 kg Butadien innerhalb 9 h in den Reaktor zu dosieren (Zulauf 2). 6 h nach Zulauf 2-Beginn wurden weitere 160g TDM in den Reaktor gegeben. Direkt nach Zulauf 2-Ende werden erneut 160 g TDM hinzugefügt. Nach

weiteren 4 h wurde die Reaktion durch Abkühlen auf 50°C und Entspannen abgebrochen.

Der Umsatz betrug 91,4 % bei einem Feststoffgehalt von 44,8 % nach einer Gesamtzeit von 16 h; die Teilchengröße $d_{50}$ = 153 nm und der QI lag bei 29. Der Hold-up bei 50 % Umsatz betrug ca. 20 %.

Beispiel 3

In einem Stahlautoklaven (120 1) wurden 46,3 kg Wasser, 0,150 kg Kaliumstearat, 150 g $NaHCO_3$ und 14 g KPS bei 70°C gelöst. Dann wurden 291 g eines Polystyrol-Saatlatex mit einer Teilchengröße von 29 nm und 33 % Feststoffgehalt hinzugefügt. Innerhalb 2,5 h wurde eine Mischung aus 8,637 kg Butadien und 3,359 kg Styrol und 120 g TDM in die Vorlage dosiert. Nach Zulaufende wurde die Temperatur auf 75°C erhöht.

30 min nach Ende des ersten Zulaufs wurden 35,987 kg Butadien und 360 g TDM innerhalb 9,5 h in den Reaktor dosiert (Zulauf 2). 1 Stunde nach Beginn des Zulauf 2 wurde begonnen, eine Mischung aus 130 g KPS und 4500 g Wasser innerhalb 8 h in den Reaktor zu dosieren. 3 h nach Zulauf 2-Ende wurde die Reaktion durch Abkühlen auf 50°C und Entspannen abgebrochen.

Der Umsatz betrug 93 % bei einem Feststoffgehalt von 45,6 % nach einer Gesamtzeit von 16 h; die Teilchengröße $d_{50}$ = 134 nm und der QI lag bei 23. Der Hold-up bei 50 % Umsatz betrug ca. 10 %.

Beispiel 4

In einem Stahlautoklaven (120 1) wurden 30,61 kg Wasser, 0,050 kg Kaliumstearat, 257 g $NaHCO_3$ und 14 g KPS bei 70°C gelöst. Dann wurden 218 g eines Polystyrol-Saatlatex mit einer Teilchengröße von 29 nm und 33 % Feststoffgehalt hinzugefügt. Innerhalb 35 min wurden 3,353 kg Styrol in die Vorlage dosiert.

Während der nachfolgenden Phasen der Polymerisation wurde die Temperatur schrittweise auf die Endtemperatur erhöht. 25 min nach Ende des ersten Zulaufs wurde eine Emulsion aus 100 g Kaliumstearat, 15,745 kg Wasser, 44,546 kg Butadien und 479 g TDM innerhalb 9,5 h in den Reaktor dosiert (Zulauf 2). Gleichzeitig mit Zulauf 2 wurde begonnen, eine Mischung aus 130 g KPS und 4500 g Wasser innerhalb 10,5 h in den Reaktor zu dosieren. 7,5 h nach Zulauf 2-Beginn wurde auf die Endtemperatur von 80°C erwärmt. 6 h nach Zulauf 2-Ende wurde die Reaktion durch Abkühlen auf 50°C und Entspannen abgebrochen.

Der Umsatz betrug 94,4 % bei einem Feststoffgehalt von 46,5 % nach einer Gesamtzeit von 17 h; die Teilchengröße ($d_{50}$) = 175 nm und der QI lag bei 30. Der Hold-up bei 50 % Umsatz betrug ca. 10 %.

Beispiel 5

In einem Stahlautoklaven (120 1) wurden 30,6 kg Wasser, 0,050 kg Kaliumstearat, 254 g $NaHCO_3$ und 14 g KPS bei 70°C gelöst. Dann wurden 218 g eines Polystyrol-Saatlatex mit einer Teilchengröße von 29 nm und 33 % Feststoffgehalt hinzugefügt. Innerhalb 2,5 h wurde eine Mischung aus 8,62 kg Butadien, 3,35 kg Styrol und 120 g TDM in die Vorlage dosiert. 1 h nach Zulaufbeginn wurde begonnen, innerhalb von 12,5 h eine Mischung aus 4500 g Wasser und 129 g KPS zulaufen zu lassen.

Nach Zulaufende der obigen Monomeren wurde während der nachfolgenden Phasen der Polymerisation wurde die Temperatur schrittweise auf die Endtemperatur erhöht. 30 min nach Ende des ersten Zulaufs wurde eine Emulsion aus 35,924 kg Butadien, 100 g Kaliumstearat, 15,745 kg Wasser und 360 g TDM innerhalb 9,5 h in den Reaktor dosiert (Zulauf 2). Während des Zulaufs 2 wurde die Reaktorinnentemperatur schrittweise erhöht, bis 7,5 h nach Beginn des Zulaufs 2 eine Endtemperatur von 80°C erreicht war. 6 h nach Zulauf 2-Ende wurde die Reaktion durch Abkühlen auf 50°C und Entspannen abgebrochen.

Der Umsatz betrug 92 % bei einem Feststoffgehalt von 45,2 % nach einer Gesamtzeit von 19 h; die Teilchengröße $d_{50}$ = 204 nm und der QI lag bei 46. Der Hold-up bei 50 % Umsatz betrug ca. 20 %.

Beispiel 6

In einem Stahlautoklaven (120 1) wurden 30,6 kg Wasser, 0,015 kg Kaliumstearat, 257 g $NaHCO_3$ und 29 g KPS bei 70°C gelöst. Dann wurden 218 g eines Polystyrol-Saatlatex mit einer Teilchengröße von 29 nm und 33 % Feststoffgehalt hinzugefügt. Innerhalb 35 min wurden 3,35 kg Styrol in die Vorlage dosiert.

25 min nach Ende des ersten Zulaufs wurde eine Emulsion aus 44,52 kg Butadien, 15,745 kg Wasser, 135 g Kalium-Stearat und 479 g TDM innerhalb 9,5 h in den Reaktor dosiert (Zulauf 2). Während des Zulaufs 2 wurde die Temperatur schrittweise erhöht, bis direkt nach dem Ende des Zulaufs 2 eine Endtemperatur von 80°C erreicht war. Gleichzeitig wurde begonnen, eine Mischung aus 144 g KPS und 4500 g Wasser innerhalb 15 h in den Reaktor zu dosieren. 12 h nach Zulauf 2-Ende wurde die Reaktion durch Abkühlen auf 50°C und Entspannen abgebrochen.

Der Umsatz betrug 91 % bei einem Feststoffgehalt von 44,6 % nach einer Gesamtzeit von 22,5 h; die Teil-

chengröße $d_{50}$ = 251 nm und der QI lag bei 43. Der Hold-up bei 50 % Umsatz betrug ca. 29 %.

**Patentansprüche**

1. Verfahren zur Herstellung von Kautschukteilchen K enthaltend in polymerisierter Form

   A) 80 bis 100 Gew.-%, bezogen auf K, von Butadien oder Isopren oder deren Mischungen (Dienmonomere A), und

   B) 0 bis 20 Gew.-%, bezogen auf K, von einem oder mehreren monoethylenisch ungesättigten Comonomeren B

   mittels Emulsionspolymerisation in Gegenwart eines oder einer Mischung verschiedener Emulgatoren ausgewählt aus der Gruppe der Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosucciute, Ethersulfonate und Harzstufen und eines Polymerisationsinitiators, **dadurch gekennzeichnet, daß** man

   1) eine Mischung M1 vorlegt, enthaltend, bezogen auf M1,

      M1a) 20 bis 100 Gew.-% des Wassers, welches zur Herstellung der Emulsion erforderlich ist (Emulsions-Wasser), und

      M1b) 0,1 bis 100 Gew.-% des Emulgators,

   2) danach eine Mischung M2 zufügt, enthaltend, bezogen auf M2,

      M2a) 90 bis 100 Gew.-% von einem oder mehreren Monomeren ausgewählt aus Styrol, $\alpha$-Methylstyrol, Butadien, n-Butylacrylat, Methylmethacrylat und Acrylnitril, und

      M2b) 0 bis 10 Gew.-% von einem oder mehreren copolymerisierbaren Monomeren,

   wobei die Monomeren M2a) und M2b) entweder in monomerer Form unter nachfolgender in-situ-Polymerisation zu einem Saatlatex, oder als Mischung aus polymerisierter und monomerer Form, zugefügt werden, und wobei das Saatlatex-Polymer eine gewichtsmittlere Molmasse über 20 000 aufweist,

   3) danach die Polymerisation der erhaltenen Mischung in Gegenwart des Polymerisationsinitiators bei Temperaturen von 5 bis 95°C startet,

   4) zeitgleich oder danach eine Mischung M3 zufügt, enthaltend

      M3a) 0 bis 100 Gew.-%, bezogen auf B, der Comonomeren B, und

      M3b) 0 bis 25 Gew.-%, bezogen auf A, der Dienmonomeren A,

   5) zeitgleich oder danach eine Mischung M4 zudosiert, enthaltend

      M4a) die restlichen 75 bis 100 Gew.-%, bezogen auf A, der Dienmonomeren A, und

      M4b)die restlichen 0 bis 100 Gew.-%, bezogen auf B, der Comonomeren B,

   und polymerisiert, und

   6) danach die Polymerisation bei einem Umsatz über 90 und unter 95 %, bezogen auf die Summe der Monomeren, beendet;

   wobei man die restlichen 0 bis 80 Gew.-% des Emulsions-Wassers und die restlichen 0 bis 99,9 Gew.-% des Emulgators einzeln oder getrennt voneinander bei einem oder mehreren der Schritte 2) bis 5) zufügt.

2. Verfahren nach Anspruch 1, **dadurch gekennzeichnet, daß** man als Emulgatoren Salze höherer Fettsäuren mit 10 bis 30 Kohlenstoffatomen verwendet.

3. Verfahren nach den Ansprüchen 1 und 2, **dadurch gekennzeichnet, daß** man als Comonomere B Styrol, α-Methylstyrol, p-Methylstyrol, t.-Butylstyrol, Acrylnitril, Methylmethacrylat, n-Butylacrylat oder deren Mischungen verwendet.

4. Verfahren nach den Ansprüchen 1 bis 3, **dadurch gekennzeichnet, daß** man die Art, Menge und Dosierung des Emulgators derart wählt, daß die gewichtsmittlere Teilchengröße $d_{50}$ 100 bis 400 nm beträgt.

5. Verfahren nach den Ansprüchen 1 bis 4, **dadurch gekennzeichnet, daß** man in Schritt 4) die Gesamtmenge der Comonomeren B zufügt.

6. Verfahren nach den Ansprüchen 1 bis 5, **dadurch gekennzeichnet, daß** man in Schritt 5) die Gesamtmenge der Dienmonomeren A zudosiert.

7. Verfahren nach den Ansprüchen 1 bis 6, **dadurch gekennzeichnet, daß** der Saatlatex aus Styrol als Monomeres M2a) aufgebaut ist.

8. Verfahren nach den Ansprüchen 1 bis 7, **dadurch gekennzeichnet, daß** die gewichtsmittlere Teilchengröße dso der Saatlatex-Partikel 10 bis 100 nm beträgt.

9. Verfahren nach den Ansprüchen 1 bis 8, **dadurch gekennzeichnet, daß** die Zudosierungsgeschwindigkeit der Monomeren A und B in Schritt 5) so gewählt wird, daß zu keinem Zeitpunkt der Polymerisatiosreaktion von A und B sich mehr als 50 Gew.-% der Gesamtmenge von monomerem A + B im Polymerisationsreaktor befinden.

10. Verfahren nach den Ansprüchen 1 bis 9, **dadurch gekennzeichnet, daß** die Zudosierungsgeschwindigkeit der Monomere A und B in Schritt 5) so gewählt wird, daß sich bis zu einem Umsatz von 50 %, bezogen auf die Summe von A + B, weniger als 30 %, bezogen auf die Summe an nicht polymerisierten und polymerisierten Monomeren A + B, nicht polymerisierte Monomere im Polymerisationsreaktor befinden.

11. Kautschukteilchen K, hergestellt nach dem Verfahren gemäß den Ansprüchen 1 bis 10.

12. Verwendung der Kautschukteilchen K gemäß Anspruch 10 als Bestandteil von thermoplastischen Formmassen, Dispersionen, Papierstreichmitteln, Oberflächenbeschichtungen und zur Textilveredlung.

## Claims

1. A process for preparing rubber particles K comprising in polymerized form

   A) from 80 to 100% by weight, based on K, of butadiene or isoprene or mixtures thereof (diene monomers A), and

   B) from 0 to 20% by weight, based on K, of one or more monoethylenically unsaturated comonomers B
   by emulsion polymerization in the presence of an emulsifier or a mixture of different emulsifiers selected from the group consisting of alkali metal salts of alkyl- or alkylarylsulfonic acids, alkyl sulfates, fatty alcohol sulfonates, salts of higher fatty acids with 10 to 30 carbon atoms, sulfosuccinates, ether sulfonates and resin soaps, and a polymerization initiator, which comprises

   1) initially introducing a mixture M1 comprising, based on M1,

      M1a) from 20 to 100% by weight of the water needed to prepare the emulsion (emulsion water), and

      M1b) from 0.1 to 100% by weight of the emulsifier,

   2) subsequently adding a mixture M2 comprising, based on M2,

M2a) from 90 to 100% by weight of one or more monomers selected from styrene, α-methylstyrene, butadiene, n-butyl acrylate, methyl methacrylate and acrylonitrile, and
M2b) from 0 to 10% by weight of one or more copolymerizable monomers,

the monomers M2a) and M2b) being added alternatively in monomeric form with subsequent in situ polymerization to give a seed latex, or as a mixture of polymerized and monomeric form, and the seed latex polymer having a weight-average molecular mass of more than 20,000,

3) then starting the polymerization of the resulting mixture in the presence of the polymerization initiator at temperatures of from 5 to 95°C,

4) simultaneously or subsequently adding a mixture M3 comprising

M3a) from 0 to 100% by weight, based on B, of the comonomers B, and

M3b) from 0 to 25% by weight, based on A, of the diene monomers A,

5) simultaneously or subsequently metering in a mixture M4 comprising

M4a)the remaining 75 to 100% by weight, based on A, of the diene monomers A, and

M4b) the remaining 0 to 100% by weight, based on B, of the comonomers B,

and carrying out polymerization, and

6) subsequently ending the polymerization at a conversion above 90 and below 95%, based on the sum of the monomers,
the remaining 0 to 80% by weight of the emulsion water and the remaining 0 to 99.9% by weight of the emulsifier being added individually or separately from one another in one or more of steps 2) to 5).

**2.** A process as claimed in claim 1, wherein said emulsifiers comprise salts of higher fatty acids with 10 to 30 carbon atoms.

**3.** A process as claimed in either of claims 1 and 2, wherein said comonomers B comprise styrene, α-methylstyrene, p-methylstyrene, t-butylstyrene, acrylonitrile, methyl methacrylate, n-butyl acrylate or mixtures thereof.

**4.** A process as claimed in any of claims 1 to 3, wherein the nature, amount and metering of the emulsifier are chosen such that the weight-average particle size $d_{50}$ is from 100 to 400 nm.

**5.** A process as claimed in any of claims 1 to 4, wherein the entirety of the comonomers B is added in step 4).

**6.** A process as claimed in any of claims 1 to 5, wherein the entirety of the diene monomers A is added in step 5).

**7.** A process as claimed in any of claims 1 to 6, wherein the seed latex is composed of styrene as monomer M2a).

**8.** A process as claimed in any of claims 1 to 7, wherein the weight-average particle size $d_{50}$ of the seed latex particles is from 10 to 100 nm.

**9.** A process as claimed in any of claims 1 to 8, wherein the metering rate of the monomers A and B in step 5) is chosen so that at no time during the polymerization reaction of A and B is more than 50% by weight of the total amount of monomeric A + B present in the polymerization reactor.

**10.** A process as claimed in any of claims 1 to 9, wherein the metering rate of the monomers A and B in step 5) is chosen so that up to a conversion of 50%, based on the sum of A + B, less than 30%, based on the sum of unpolymerized and polymerized monomers A + B, of unpolymerized monomers are present in the polymerization reactor.

**11.** Rubber particles K prepared by a process as claimed in any of claims 1 to 10.

12. The use of rubber particles K as claimed in claim 10 as a constituent of thermoplastic molding compounds, dispersions, paper coating compositions or surface coatings, or for textile finishing.

## Revendications

1. Procédé de fabrication de particules de caoutchouc K contenant, sous forme polymérisée,

   A) de 80 à 100% en poids, par rapport à K, de butadiène ou d'isoprène ou de leurs mélanges (monomères diènes A) et
   B) de 0 à 20% en poids, par rapport à K, d'un ou plusieurs comonomères B monoéthyléniquement insaturés,

   par polymérisation en émulsion en présence d'un émulsifiant ou d'un mélange de différents émulsifiants choisis dans le groupe formé par les sels de métaux alcalins d'acides alkyl- ou alkylarylsulfoniques, des sulfates d'alkyle, des sulfonates d'acides gras, des sels d'acides gras supérieurs comportant de 10 à 30 atomes de carbone, des sulfosuccinates, des éther-sulfonates et des composés résiniques et d'un initiateur de polymérisation, **caractérisé en ce que**

   1) on charge un mélange M1 contenant, par rapport à M1,

      M1a) de 20 à 100% en poids de l'eau nécessaire à la préparation de l'émulsion (eau d'émulsion) et
      M1b) de 0,1 à 100% en poids de l'émulsifiant,

   2) on ajoute ensuite un mélange M2 contenant, par rapport à M2

      M2a) de 90 à 100% en poids d'un ou plusieurs monomères choisis parmi le styrène, l'α-méthylstyrène, le butadiène, l'acrylate de n-butyle, le méthacrylate de méthyle et l'acrylonitrile, et
      M2b) de 0 à 10% en poids d'un ou plusieurs monomères copolymérisables,

   les monomères M2a) et M2b) étant ajoutés, soit sous forme de monomères avec polymérisation subséquente in situ pour former un latex de semence, soit sous forme d'un mélange de formes polymérisée et monomère, et le latex de semence présentant une masse molaire moyenne de plus de 20.000,
   3) on amorce ensuite la polymérisation du mélange obtenu en présence de l'initiateur de polymérisation, à des températures de 5 à 95°C,
   4) simultanément ou ensuite, on ajoute un mélange M3 contenant

      M3a) de 0 à 100% en poids, par rapport à B, des comonomères B, et
      M3b) de 0 à 25% en poids, par rapport à A, des monomères diènes A,

   5) simultanément ou ensuite, on ajoute un mélange M4 contenant

      M4a) les 75 à 100% en poids restants, par rapport à A, des monomères diènes A, et
      M4b) les 0 à 100% en poids restants, par rapport à B, des comonomères B,

   et on polymérise, et
   6) on termine ensuite la polymérisation, à un taux de conversion de plus de 90 et de moins de 95%, par rapport à la somme des monomères,

   les 0 à 80% en poids restants de l'eau d'émulsion et les 0 à 99,9% en poids restants de l'émulsifiants étant ajoutés individuellement ou séparément dans une ou plusieurs des étapes 2) à 5).

2. Procédé selon la revendication 1, **caractérisé en ce que** l'on utilise comme émulsifiants des sels d'acides gras supérieurs comportant de 10 à 30 atomes de carbone.

3. Procédé selon les revendications 1 et 2, **caractérisé en ce que** l'on utilise comme comonomères B du styrène, de l'α-méthylstyrène, du p-méthylstyrène, du t-butylstyrène, de l'acrylonitrile, du méthacrylate de méthyle, de l'acrylate de n-butyle, ou leurs mélanges.

**4.** Procédé selon l'une quelconque des revendications 1 à 3, **caractérisé en ce que** le type, la quantité et le dosage de l'émulsifiant sont choisis de manière que la moyenne pondérale de taille des particules $d_{50}$ soit de 100 à 400 nm.

**5.** Procédé selon les revendications 1 à 4, **caractérisé en ce que** l'on ajoute dans l'étape 4) la totalité des comonomères B.

**6.** Procédé selon les revendications 1 à 5, **caractérisé en ce que** l'on ajoute dans l'étape 5) la totalité des monomères diènes A.

**7.** Procédé selon les revendications 1 à 6, **caractérisé en ce que** le latex de semence est constitué de styrène en tant que monomère M2a).

**8.** Procédé selon les revendications 1 à 7, **caractérisé en ce que** la moyenne pondérale de taille de particules $d_{50}$ des particules de latex de semence est de 10 à 100 nm.

**9.** Procédé selon les revendications 1 à 8, **caractérisé en ce que** la vitesse d'addition dosée des monomères A et B dans l'étape 5) est choisie de manière qu'à aucun moment de la réaction de polymérisation de A et B, il se trouve plus de 50% en poids de la quantité totale de monomères A + B dans le réacteur de polymérisation.

**10.** Procédé selon les revendications 1 à 9, **caractérisé en ce que** la vitesse d'addition dosée des monomères A et B dans l'étape 5) est choisie de manière que, jusqu'à un taux de conversion de 50%, par rapport à la somme de A + B, il se trouve moins de 30%, par rapport à la somme de monomères A + B non polymérisés et polymérisés, de monomères non polymérisés dans le réacteur de polymérisation.

**11.** Particules de caoutchouc K, préparées par le procédé selon les revendications 1 à 10.

**12.** Utilisation des particules de caoutchouc K selon la revendication 10 comme constituants de masses de moulage thermoplastiques, de dispersions, d'agents de couchage de papier, de revêtements de surface et pour l'ennoblissement de textiles.